Europäisches Patentamt

European Patent Office

Office européen des brevets

(11) Veröffentlichungsnummer: **0 210 491**
**A2**

(12) # EUROPÄISCHE PATENTANMELDUNG

(21) Anmeldenummer: 86109413.4

(22) Anmeldetag: 10.07.86

(51) Int. Cl.⁴: **A 47 B 96/18**
**E 06 B 1/70**

(30) Priorität: 27.07.85 DE 3527006

(43) Veröffentlichungstag der Anmeldung:
04.02.87 Patentblatt 87/6

(84) Benannte Vertragsstaaten:
AT BE CH DE FR GB IT LI LU NL SE

(71) Anmelder: Duropal-Werk Eberh. Wrede GmbH & Co. KG
Industriegelände Bruchhausen
D-5760 Arnsberg 1(DE)

(72) Erfinder:
Der Erfinder hat auf seine Nennung verzichtet

(74) Vertreter: von Rohr, Hans Wilhelm, Dipl.-Phys. et al,
Patentanwälte Gesthuysen & von Rohr Huyssenallee 15
Postfach 10 13 33
D-4300 Essen 1(DE)

(54) Verbundplatte.

(57) Bei einer Verbundplatte mit einer Kernplatte (1), einer auf der Oberseite der Kernplatte (1) aufgeleimten Deckplatte (2), einem auf den Rand (4) der Kernplatte (1) aufgeleimten Randstreifen und einer auf der Unterseite der Kernplatte (1) aufgeleimten Schutzfolie (3) od. dgl., bei der auf der Unterseite der Kernplatte (1) in einem bestimmten Abstand vom Rand (4) eine im wesentlichen parallel zum Rand (4) verlaufende Abtropfnut (7) vorgesehen ist, werden erhebliche fertigungstechnische Vereinfachungen und gleichzeitig ein erheblich verbesserter Schutz gegen das Hineinlaufen von Wassertropfen auf der Unterseite der Verbundplatte erreicht, indem die Abtropfnut (7) unmittelbar in die Kernplatte (1) eingebracht ist, indem die bis auf die Unterseite der Kernplatte (1) herumgezogene Deckplatte (2) und/oder die auf der Unterseite aufgeleimte Schutzfolie (3) od. dgl. in die Abtropfnut (7) so weit wie möglich hineingezogen sind und indem der von der Deckplatte (2) und/oder der Schutzfolie (3) od. gl. nicht abgedeckte Bereich der Abtropfnut (7) einschließlich der freien Ränder der Deckplatte (2) und/oder der Schutzfolie (3) od. dgl. von einem Dichtstreifen (8) feuchtigkeitsdicht abgedeckt ist. Die Abtropfnut (7) ist dabei in besonders zweckmäßiger Weise insgesamt trapezförmig ausgebildet und in den Übergangsbereichen zwischen der Unterseite der Kernplatte (1) und der Abtropfnut (7) abgerundet. Die Neigung der Seiten der Abtropfnut (7), die Breite der Abtropfnut (7) in Höhe der Unterseite der Kernplatte (1) bzw. der Verbundplatte und die Tiefe der Abtropfnut (7) sind so bemessen, daß ein Überspringen von Wassertropfen praktisch ausgeschlossen ist. Der Dichtstreifen (8) besteht zweckmäßigerweise aus gespritztem Polyurethan od. dgl..

Fig.3

Die Erfindung betrifft eine Verbundplatte mit einer Kernplatte, einer
auf der Oberseite der Kernplatte aufgeleimten Deckplatte, vorzugsweise
einer Hochdruck-Schichtstoffplatte (HPL-Platte, DIN 16926), einem auf
den Rand der Kernplatte aufgeleimten Randstreifen und einer auf der Unterseite der Kernplatte aufgeleimten Schutzfolie od. dgl., insbesondere
in Form einer Hochdruck-Schichtstoffplatte, wobei, vorzugsweise, die
Kernplatte am Rand abgerundet ist und ggf. einen über die Oberseite aufragenden Randwulst aufweist, wobei, vorzugsweise, die Deckplatte zur
Bildung des Randstreifens von der Oberseite um den Rand der Kernplatte,
vorzugsweise bis auf die Unterseite der Kernplatte herumgezogen ist und
wobei auf der Unterseite der Kernplatte in einem bestimmten Abstand vom
Rand eine im wesentlichen parallel zum Rand verlaufende Abtropfnut vorgesehen ist.

Bei den grundsätzlich seit langer Zeit bekannten Verbundplatten handelt
es sich bei der Kernplatte meist um eine Holzspanplatte, Holzpreßplatte
od. dgl.. Grundsätzlich sind als Kernplatten aber auch Naturholzplatten
oder Platten aus anderen Materialien, beispielsweise aus Kunststoff,
denkbar. Auf die Oberseite einer Kernplatte ist regelmäßig eine Deckplatte
aufgeleimt, bei der es sich üblicherweise um eine Schichtstoffplatte,
zumeist um eine Hochdruck-Schichtstoffplatte (HPL-Platte nach DIN 16926),
handelt. Gleichwohl sind auch hier andere Materialien, beispielsweise
duroplastische oder thermoplastische Kunststoffe, Furnierholz oder Metall,
für unterschiedliche Anwendungsfälle bekannt. Wesentlich ist jedenfalls,
daß die Deckplatte wasser- und hitzebeständig ist, da durch die Deckplatte auf der Oberseite der Kernplatte zumeist eine Arbeitsfläche oder
anderweitig beanspruchte Fläche der Verbundplatte gebildet wird. Auf
die Unterseite der Kernplatte ist meist eine Schutzfolie od. dgl. aufgeleimt. Auf die Unterseite kann anstatt einer Schutzfolie auch eine Deckplatte der zuvor erläuterten oder einer ähnlichen Art aufgeleimt sein.
Auch diese Schutzfolie bzw. Deckplatte auf der Unterseite der Kernplatte
dient dem Schutz der Kernplatte gegen Feuchtigkeit und/oder Hitzeeinwirkungen.

Bei Verbundplatten der in Rede stehenden Art finden seit längerer Zeit
abgerundete Ränder bzw. Oberkanten und ggf. auch Unterkanten Interesse,
einerseits aus  ergonomischen Gesichtspunkten und Gesichtspunkten der
Verletzungsgefahr, andererseits aus optischen Gesichtspunkten (Softline-
Dekor). Bei manchen Verbundplatten, insbesondere bei Verbundplatten, die
als Arbeitsplatten für Küchen, Bäder, Labors od. dgl. sowie als Abdeckplatten und Fensterbänke Verwendung finden, kommt einer Abrundung der
Oberkante der Kernplatte und einem Herumziehen der Deckplatte zur Bildung
des Randstreifens bis auf die Unterseite der Kernplatte zusätzliche
Bedeutung zu. Das ist nicht nur aus optischen Gründen zweckmäßig, sondern
insbesondere beim Hantieren mit Wasser vorteilhaft, da damit Leimfugen
für das Eintreten von Wasser oder Feuchtigkeit an der Oberkante und ggf.
auch der Unterkante der Verbundplatte vermieden werden. Im übrigen ist
bei derartigen Verbundplatten auch häufig ein über die Oberseite der
Deckplatte aufragender Randwulst zu finden, der als Wasserablaufschutz
dient.

Die bekannte Verbundplatte, die eingangs erläutert worden ist und von der
die Erfindung ausgeht (DE-OS 33 08 947), zeichnet sich nun dadurch aus,
daß auf der Unterseite der Kernplatte in einem bestimmten Abstand vom
Rand eine im wesentlichen parallel zum Rand verlaufende Abtropfnut vorgesehen ist. Diese Ausgestaltung der bekannten Verbundplatte trägt der
Tatsache Rechnung, daß am Rand der Verbundplatte herablaufendes Wasser
durchaus nicht selbstverständlich an der Unterkante abtropft. Aufgrund
der Adhäsionswirkung des Wassers haben Wassertropfen die Tendenz, von
der Unterkante der Verbundplatte auf der Unterseite nach innen zu laufen.
Diese Tendenz ist besonders ausgeprägt bei durch Verwendung von Spülmittel entspanntem Wasser, da dessen Adhäsionswirkung ganz außerordentlich
groß ist. Dies ist für Verbundplatten außerordentlich unangenehm, da die
Unterseite der Verbundplatten für den Eintritt von Feuchtigkeit besonders
anfällig ist. Außerdem führen auf der Unterseite der Verbundplatte nach
innen laufende Wassertropfen zu Wasseransammlungen in Küchenmöbeln und
zum Quellen ungeschützter Holzteile. Durch die parallel zum Rand der Kernplatte verlaufende Abtropfnut soll ein Abtropfen der Wassertropfen
hier erzwungen werden.

Zur Erzielung des zuvor erläuterten Effekts ist bei der bekannten Verbundplatte die Abtropfnut in einer Profilleiste aus einem thermoplastischen, nässeabweisenden Kunststoff ausgebildet. Der Querschnitt der Abtropfnut in der Profilleiste ist halbrund oder rechteckig, so daß zwischen der mit der Unterseite der Kernplatte fluchtenden Unterkante der
Profilleiste und der Seite der Abtropfnut eine möglichst scharfe Abtropfkante gebildet ist. Die Profilleiste selbst ist in eine rechteckige,
nutartige Ausnehmung in der Kernplatte eingeleimt und an ihren Unterkanten randseitig mit entweder der um den Rand der Kernplatte herumgezogenen
Deckplatte und/oder der auf der Unterseite aufgeleimten Schutzfolie bzw.
Deckplatte verleimt. Zwar wird so durch die direkte Verleimung Deckplatte
bzw. Schutzfolie od. dgl. / Profilleiste aus thermoplastischem Material
eine für Feuchtigkeitseintritt anfällige Leimfuge Deckplatte bzw. Schutzfolie / Kernplatte, insbesondere Holzspanplatte, vermieden, jedoch ist
der Fertigungsaufwand für diese Verbundplatte vergleichsweise hoch. Das
liegt einerseits an der gesondert vorzusehenden Profilleiste, andererseits an der notwendigen Exaktheit bei der Fertigung der Ausnehmung in
der Kernplatte, da stets ein absolut genaues Fluchten der Unterkante der
Profilleiste mit der Unterseite der Kernplatte erforderlich ist. Im
übrigen ist die Gefahr, daß nach innen ablaufende Wassertropfen die Abtropfnut in der Profilleiste "überspringen", überraschend groß. Dieser
Gefahr kann man nur durch eine Verbreiterung der Abtropfnut begegnen,
was wiederum zu einer erheblichen Vergrößerung der Profilleiste und einer
Erhöhung des Fertigungsaufwands führt.

Ausgehend von dem zuvor erläuterten Stand der Technik liegt der Erfindung
die Aufgabe zugrunde, die bekannte Verbundplatte mit einer auf der Unterseite verlaufenden Abtropfnut so auszugestalten und weiterzubilden, daß
sie fertigungstechnisch erheblich einfacher ist und gleichzeitig einen
besseren Schutz gegen das Hineinlaufen von Wassertropfen auf der Unterseite der Verbundplatte aufweist.

Die erfindungsgemäße Verbundplatte, bei der die zuvor aufgezeigte Aufgabe
gelöst ist, ist dadurch gekennzeichnet, daß die Abtropfnut unmittelbar
in die Kernplatte eingebracht ist, daß die bis auf die Unterseite der
Kernplatte herumgezogene Deckplatte und/oder die auf der Unterseite aufgeleimte Schutzfolie od. dgl. in die Abtropfnut so weit wie möglich
hineingezogen sind und daß der von der Deckplatte und/oder der Schutzfolie
od. dgl. nicht abgedeckte Bereich der Abtropfnut einschließlich der
freien Ränder der Deckplatte und/oder der Schutzfolie od. dgl. von einem
Dichtstreifen feuchtigkeitsdicht abgedeckt ist. Zunächst ist wesentlich,
daß bei der erfindungsgemäßen Verbundplatte die Abtropfnut nicht in eine
eigene Profilleiste aus thermoplastischem Material, sondern unmittelbar
in die Kernplatte eingebracht wird. Die Flächen der Abtropfnut sind damit
zunächst gegen Feuchtigkeitseintritt nicht geschützt. Dieser Schutz erfolgt erfindungsgemäß durch die auf der Unterseite der Kernplatte herumgezogene Deckplatte und/oder durch die auf der Unterseite aufgeleimte
Schutzfolie od. dgl. selbst, indem diese nämlich so weit wie irgend möglich in die Abtropfnut hineingezogen werden. Wie weit diese in die Abtropfnut hineingezogen werden können, hängt von der geometrischen Form und den
Abmessungen der Abtropfnut, der Dicke der Deckplatte bzw. der Schutzfolie od. dgl. und auch von fertigungstechnischen Überlegungen ab. Wesentlich ist, daß die Deckplatte und/oder die Schutzfolie od. dgl. die
Flächen der Abtropfnut weitestmöglich abdecken, auf diese also aufgeleimt
sind. Der verbleibende, weder von der Deckplatte noch von der Schutzfolie
od. dgl. abgedeckte Bereich der Abtropfnut, der sich normalerweise an der
tiefsten Stelle der Abtropfnut befinden wird, ist mit einem Dichtstreifen
feuchtigkeitsdicht abgedeckt, und zwar so, daß auch die freien Ränder der
Deckplatte und/oder der Schutzfolie od. dgl. von diesem Dichtstreifen
überfaßt werden. Damit ist zurückgesetzt in der Abtropfnut und damit bei
eingebauter Verbundplatte normalerweise praktisch unsichtbar der Dichtstreifen angeordnet. Das wiederum gibt die Möglichkeit, diesen Dichtstreifen ungehindert durch designerische Überlegungen rein nach anwendungstechnischen Gesichtspunkten auszugestalten, insbesondere für eine optimale Feuchtigkeitsabdichtung auszulegen.

Bei der erfindungsgemäßen Verbundplatte entfällt der gesamte Aufwand, der mit der bekannten Verwendung einer Profilleiste verbunden war. Außerdem gewinnt man durch den Verzicht auf die Profilleiste eine erhebliche Gestaltungsfreiheit bei der Ausgestaltung der Abtropfnut, insbesondere bei der Wahl der Breite der Abtropfnut in Höhe der Unterseite der Kernplatte bzw. Verbundplatte. Das wiederum führt dazu, daß die Breite der Abtropfnut so gewählt werden kann, daß ein Überspringen der Abtropfnut durch Wassertropfen ausgeschlossen ist.

Es gibt eine Mehrzahl von Möglichkeiten, die Lehre der Erfindung auszugestalten und weiterzubilden. Beispiele dieser Möglichkeiten sowie Ausführungsbeispiele für eine erfindungsgemäß ausgebildete Verbundplatte werden nachfolgend unter Bezugnahme auf die Zeichnung näher erläutert. In der Zeichnung zeigt

Fig. 1    ein Ausführungsbeispiel einer Verbundplatte im Vertikalschnitt,

Fig. 2    ausschnittweise, im Vertikalschnitt, den Bereich der Abtropfnut in einer Verbundplatte, jedoch bei einem zweiten Ausführungsbeispiel einer Verbundplatte und

Fig. 3    in perspektivischer Ansicht schräg von unten gesehen ein Stück einer Verbundplatte gemäß Fig. 1.

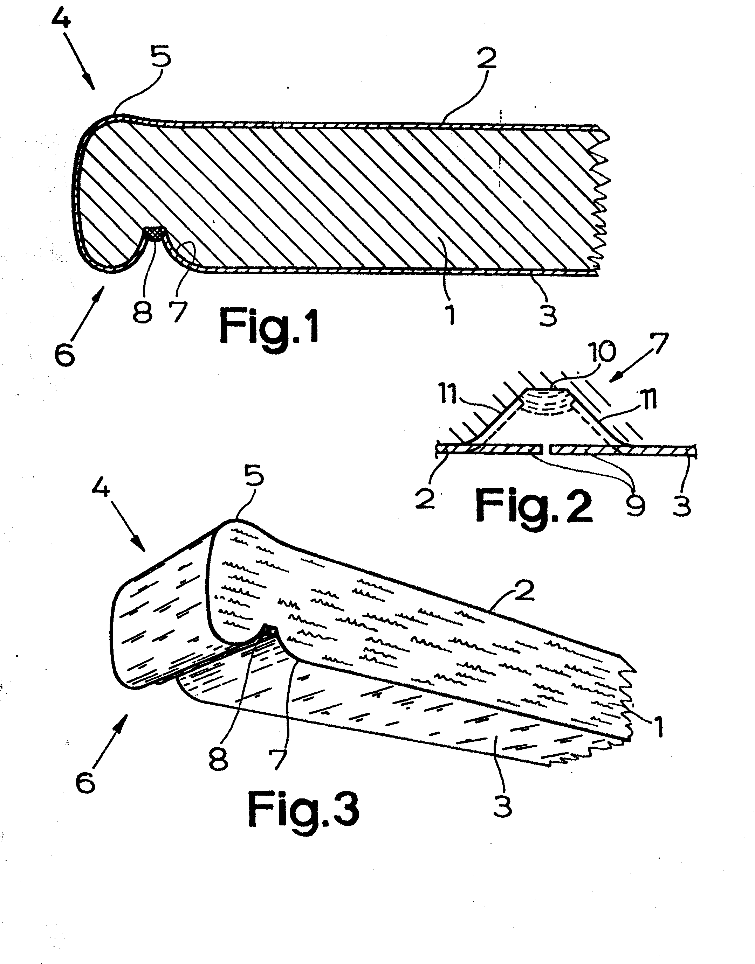

Die in Fig. 1 dargestellte Verbundplatte weist zunächst eine Kernplatte 1, im dargestellten Ausführungsbeispiel eine Holzspanplatte, eine auf der Oberseite der Kernplatte 1 aufgeleimte Deckplatte 2, im dargestellten bevorzugten Ausführungsbeispiel eine Hochdruck-Schichtstoffplatte (HPL-Platte, DIN 16926), einen auf den Rand 4 der Kernplatte 1 aufgeleimten, nicht mit einem gesonderten Bezugszeichen versehenen Randstreifen und eine auf der Unterseite der Kernplatte 1 aufgeleimte Schutzfolie 3 od. dgl., im hier dargestellten Ausführungsbeispiel auch in Form einer Hochdruck-Schichtstoffplatte, auf. Zu diesen grundsätzlichen Teilen der dargestellten Verbundplatte ist eingangs des allgemeinen Teils der Beschreibung einiges erlautert worden, auf diese Erläuterungen darf verwiesen werden.

Das dargestellte Ausführungsbeispiel einer Verbundplatte bezieht sich auf eine besonders bevorzugte Ausführungsform einer Verbundplatte, da die Kernplatte 1 hier am Rand 4 abgerundet ist und einen über die Oberseite aufragenden Randwulst 5 aufweist und als die Deckplatte 2 zur Bildung des Randstreifens von der Oberseite um den Rand der Kernplatte 1 bis auf die Unterseite der Kernplatte 1 herumgezogen ist. Auch auf der Unterseite der Kernplatte ist diese im Bereich der Unterkante 6 abgerundet.

Fig. 1 zeigt nun deutlich, daß auf der Unterseite der Kernplatte 1 in einem bestimmten Abstand vom Rand 4 eine im wesentlichen parallel zum Rand 4 verlaufende Abtropfnut 7 vorgesehen ist. Der Abstand der Abtropfnut 7 vom Rand 4 der Kernplatte 1 liegt meist zwischen 10 mm und 50 mm. Die Deckplatte 2 und im hier dargestellten Ausführungsbeispiel auch die Schutzfolie 3 haben im hier dargestellten Ausführungsbeispiel tatsächlich eine Dicke zwischen 0,5 mm und 1,2 mm, vorzugsweise von ca. 0,8 mm, so daß die Darstellung in Fig. 1, eine Gesamtdicke der Kernplatte 1 von ca. 36 mm vorausgesetzt, übertrieben ist.

Fig. 1 macht besonders deutlich, daß die Abtropfnut 7 unmittelbar in die Kernplatte 1 eingebracht ist, daß die bis auf die Unterseite der Kernplatte 1 herumgezogene Deckplatte 2 einerseits und die auf der Unterseite aufgeleimte Schutzfolie 3 in Form einer weiteren Deckplatte andererseits in die Abtropfnut 7 so weit wie möglich hineingezogen sind und daß der von der Deckplatte 2 und der Schutzfolie 3 nicht abgedeckte Bereich der Abtropfnut 7 einschließlich der freien Ränder der Deckplatte 2 und der Schutzfolie 3 von einem Dichtstreifen 8 feuchtigkeitsdicht abgedeckt ist. Der Dichtstreifen 8 liegt, wie Fig. 1 in Verbindung mit Fig. 3 sehr schön deutlich macht, zurückgesetzt in der Abtropfnut 7, so daß er normalerweise bei eingebauter Verbundplatte nicht erkennbar ist. Folglich kann der Dichtstreifen 8 unbeeinträchtigt von designerischen Überlegungen rein nach anwendungstechnischen Gesichtspunkten, insbesondere hinsichtlich eines optimalen Feuchtigkeitsschutzes ausgewählt und ausgestaltet werden.

Fig. 2 zeigt ein weiteres Ausführungsbeispiel einer Verbundplatte ausschnittweise im Bereich der Abtropfnut 7, so daß einige besondere Aspekte
der Erfindung sich anhand dieser Figur besonders deutlich erläutern
lassen.

Nach bevorzugter Lehre der Erfindung ist die Abtropfnut 7, wie in Fig. 2
dargestellt, insgesamt im Querschnitt etwa trapezförmig ausgebildet. Zumindest sollte eine solche Ausbildung zum Rand 4 der Kernplatte 1 zu getroffen sein. Auch eine im Querschnitt etwa dreieckige Ausbildung der
Abtropfnut 7 erscheint zweckmäßig. Wesentlich ist jedenfalls, daß die
Seiten der Abtropfnut 7 nicht parallel zueinander verlaufen. Das führt
dazu, daß die Abtropfnut 7 an ihrem tiefsten Punkt schmaler ist als in
Höhe der Unterseite der Kernplatte 1 bzw. der Verbundplatte. Das kommt
der Abtropfwirkung zugute, wie später noch näher erläutert werden wird.

Fig. 2 läßt gut erkennen, daß im hier dargestellten bevorzugten Ausführungsbeispiel auf die beiden nichtparallelen Seiten 11 der Abtropfnut 7 im wesentlichen bis zum Boden 10 der Abtropfnut 7 die Deckplatte 2 bzw. die
Schutzfolie 3 aufgeleimt werden. Diesen Endzustand zeigt Fig. 2 in gestrichelten Linien. In durchgezogenen Linien zeigt Fig. 2 einen fertigungstechnischen Zwischenschritt, nämlich einen Zwischenschritt, bei dem überstehende freie Enden 9 der Deckplatte 2 und der Schutzfolie 3 noch nicht
mit den Seiten 11 der Abtropfnut 7 verleimt sind. Durch entsprechende und
für sich bekannte Formwerkzeuge werden diese überstehenden Enden 9 dann
in die Abtropfnut 7 hineingebogen und mit den Seiten 11 der Abtropfnut 7
verleimt. Abschließend wird dann der Dichtstreifen 8 am Boden 10 der
Abtropfnut 7 eingebracht, was gleichfalls in gestrichelten Linien dargestellt ist. Ob die überstehenden Enden 9 der Deckplatte 2 und der Schutzfolie 3 gleichzeitig mit den entsprechenden Seiten 11 der Abtropfnut 7
verleimt werden oder nacheinander, hängt von dem jeweiligen Fertigungsablauf der Verbundplatte insgesamt ab.

- 7 -

Nach bevorzugter Lehre der Erfindung beträgt der innere Basiswinkel zwischen dem Boden 10 und der dem Rand 4 der Kernplatte 1 nahen Seite 11 bzw. beiden Seiten 11 der Abtropfnut 7 zwischen $150^O$ und $120^O$, vorzugsweise etwa $135^O$. In Fig. 1, die ein Ausführungsbeispiel einer Verbundplatte zeigt, deren Abtropfnut 7 den Querschnitt eines krummlinigen Trapezes hat, beträgt der innere Basiswinkel ca. $120^O$. Demgegenüber beträgt der innere Basiswinkel bei der in Fig. 2 dargestellten Abtropfnut 7 mit dem Querschnitt eines geradlinigen Trapezes etwa $135^O$, was einem äußeren Basiswinkel von etwa $45^O$ entspricht. Das ist ein recht guter Kompromiß zwischen dem fertigungstechnischen Wunsch nach einer möglichst flachen Abtropfnut 7 und dem anwendungstechnischen Wunsch nach einer möglichst tiefen Abtropfnut 7.

Die in den Figuren dargestellten Ausführungsbeispiele zeigen besonders bevorzugte Ausführungsformen von erfindungsgemäßen Verbundplatten, da die Übergangsbereiche zwischen der Unterseite der Kernplatte 1 und der Abtropfnut 7 hier abgerundet sind. Die Rundungsradien werden zweckmäßigerweise entsprechend der mit dem Material der Deckplatte 2 bzw. der Schutzfolie 3 od. dgl. realisierbaren minimalen Rundungsradien abgestimmt. Während in Fig. 1 etwa die minimalen Rundungsradien realisiert sind, sind bei Fig. 2 die Übergangsbereiche mit größeren Rundungsradien abgerundet.

Die Abrundung der Übergangsbereiche zwischen der Unterseite der Kernplatte 1 und der Abtropfnut 7 beruht auf der überraschenden Erkenntnis, daß im Gegensatz zum Stand der Technik eine scharfe Abtropfkante an der Abtropfnut 7 nicht notwendig ist, wenn die Abtropfnut 7 insgesamt breit genug ist. Dann erfolgt nämlich in jedem Fall ein Abtropfen nach innen laufender Wassertropfen, aufgrund der Breite der Abtropfnut 7 vermögen diese die Abtropfnut 7 nicht zu überspringen.

Fig. 1 zeigt noch ein besonders bevorzugtes Ausführungsbeispiel einer Verbundplatte, das dadurch gekennzeichnet ist, daß der Rundungsradius in den Übergangsbereichen zwischen der Unterseite der Kernplatte 1 und der Abtropfnut 7 etwa gleich dem Rundungsradius des Übergangsbereichs zwischen der Unterseite der Kernplatte 1 und dem Rand 4 ist. Dies ist fertigungstechnisch und designerisch besonders zweckmäßig. Zu dieser Konstruktion korrespondiert im übrigen die Lösung aus Fig. 1 mit dem Querschnitt eines krummlinigen Trapezes bzw. evtl. auch eines krummlinigen Dreiecks mit insgesamt bis zum Boden 10 abgerundeten Seiten der Abtropfnut 7.

Hinsichtlich der Maße der Abtropfnut 7 und/oder des Dichtstreifens 8 gibt es natürlich eine erhebliche Variationsbreite, die wesentlich auch von der Dicke der Kernplatte 1, der Deckplatte 2, der Schutzfolie 3 od. dgl. und des Abstandes der Abtropfnut 7 vom Rand 4 abhängt. Bei den eingangs angegebenen oder ähnlichen Maßen hat es sich als besonders zweckmäßig erwiesen, daß die Tiefe der Abtropfnut 7 zwischen 6 mm und 16 mm, vorzugsweise zwischen 8 mm und 14 mm, insbesondere etwa 10 mm bis 12 mm, beträgt und/oder daß die Breite der Abtropfnut 7 am Boden zwischen 2 mm und 10 mm, vorzugsweise zwischen 4 mm und 8 mm, insbesondere 5 mm bis 6 mm, beträgt und/oder daß die maximale Dicke des Dichtstreifens 8 zwischen 1 mm und 5 mm, vorzugsweise etwa 2 mm bis 3 mm, beträgt. Die Breite der Abtropfnut 7 am Boden 10 steht in einer bestimmten Wechselbeziehung einerseits mit der Tiefe der Abtropfnut 7, andererseits mit dem inneren Basiswinkel zwischen dem Boden 10 und den Seiten 11. Wie Fig. 2 deutlich zeigt, sollten nämlich aus fertigungstechnischen Gründen die überstehenden freien Enden 9 der Deckplatte 2 und der Schutzfolie 3 vor Verleimen mit den Seiten 11 der Abtropfnut 7 nicht aneinander zur Anlage kommen. Im übrigen haben sich die zuvor als besonders bevorzugt hervorgehobenen Maße der Abtropfnut 7 durch Versuche als besonders zweckmäßig für eine Sicherung gegen das Überspringen von Wassertropfen erwiesen.

Hinsichtlich der Ausgestaltung des    Dichtstreifens 8 ist weiter oben schon erläutert worden, daß dieser aufgrund der geometrischen Gestaltung der erfindungsgemäßen Verbundplatte praktisch allein nach anwendungstechnischen Gesichtspunkten ausgewählt und ausgestaltet sein kann. Besonders empfehlenswert ist es, daß der Dichtstreifen 8 aus Kunststoff, vorzugsweise aus einem spritzfähigen Kunststoff, insbesondere aus Polyurethan
od. dgl., besteht und vorzugsweise als gespritzte Dichtraupe ausgeführt
ist. Das Aufspritzen des Dichtstreifens 8 als Dichtraupe aus Polyurethan
ist wegen der Werkstoffeigenschaften von Polyurethan kaum mit sehr hoher
Maßhaltigkeit zu gewährleisten. Das ist aber wegen der "versenkten"
Anordnung des Dichtstreifens 8 auch nicht problematisch.

Patentansprüche:

1. Verbundplatte mit einer Kernplatte, einer auf der Oberseite der Kernplatte aufgeleimten Deckplatte, vorzugsweise einer Hochdruck-Schichtstoffplatte (HPL-Platte, DIN 16926), einem auf den Rand der Kernplatte aufgeleimten Randstreifen und einer auf der Unterseite der Kernplatte aufgeleimten Schutzfolie od. dgl., insbesondere in Form einer Hochdruck-Schichtstoffplatte, wobei, vorzugsweise, die Kernplatte am Rand abgerundet ist und ggf. einen über die Oberseite aufragenden Randwulst aufweist, wobei, vorzugsweise, die Deckplatte zur Bildung des Randstreifens von der Oberseite um den Rand der Kernplatte, vorzugsweise bis auf die Unterseite der Kernplatte herumgezogen ist und wobei auf der Unterseite der Kernplatte in einem bestimmten Abstand vom Rand eine im wesentlichen parallel zum Rand verlaufende Abtropfnut vorgesehen ist, d a d u r c h   g e k e n n-z e i c h n e t, daß die Abtropfnut (7) unmittelbar in die Kernplatte (1) eingebracht ist, daß die bis auf die Unterseite der Kernplatte (1) herumgezogene Deckplatte (2) und/oder die auf der Unterseite aufgeleimte Schutzfolie (3) od. dgl. in die Abtropfnut (7) so weit wie möglich hineingezogen sind und daß der von der Deckplatte (2) und/oder der Schutzfolie (3) od. dgl. nicht abgedeckte Bereich der Abtropfnut (7) einschließlich der freien Ränder der Deckplatte (2) und/oder der Schutzfolie (3) od. dgl. von einem Dichtstreifen (8) feuchtigkeitsdicht abgedeckt ist.

2. Verbundplatte nach Anspruch 1, dadurch gekennzeichnet, daß die Abtropfnut (7) zumindest zum Rand (4) der Kernplatte (1) zu, vorzugsweise aber insgesamt, im Querschnitt etwa trapezförmig oder dreieckig ausgebildet ist und daß auf die beiden nichtparallelen Seiten (11) der Abtropfnut (7) im wesentlichen bis zum Boden (10) der Abtropfnut (7) die Deckplatte (2) und/oder die Schutzfolie (3) od. dgl. aufgeleimt sind.

3. Verbundplatte nach Anspruch 2, dadurch gekennzeichnet, daß der innere Basiswinkel zwischen dem Boden (10) und der dem Rand (4) der Kernplatte (1) nahen Seite (11), vorzugsweise den beiden Seiten (11), der Abtropfnut (7)
zwischen 150° und 120°, vorzugsweise etwa 135°, beträgt.

4. Verbundplatte nach einem der Ansprüche 1 bis 3, dadurch gekennzeichnet,
daß die Übergangsbereiche zwischen der Unterseite der Kernplatte (1) und
der Abtropfnut (7) abgerundet sind, vorzugsweise entsprechend der mit
dem Material der Deckplatte (2) bzw. der Schutzfolie (3) od. dgl. realisierbaren minimalen Rundungsradien.

5. Verbundplatte nach Anspruch 4, dadurch gekennzeichnet, daß der Rundungsradius in den Übergangsbereichen zwischen der Unterseite der Kernplatte (1)
und der Abtropfnut (7) etwa gleich dem Rundungsradius des Übergangsbereichs zwischen der Unterseite der Kernplatte (1) und dem Rand (4) ist.

6. Verbundplatte nach Anspruch 4 oder 5, dadurch gekennzeichnet, daß
die Seiten der Abtropfnut (7) insgesamt bis zum Boden (10) abgerundet sind.

7. Verbundplatte nach einem der Ansprüche 1 bis 6, dadurch gekennzeichnet,
daß die Tiefe der Abtropfnut (7) zwischen 6 mm und 16 mm, vorzugsweise
zwischen 8 mm und 14 mm, insbesondere etwa 10 mm bis 12 mm, beträgt.

8. Verbundplatte nach einem der Ansprüche 1 bis 7, dadurch gekennzeichnet,
daß die Breite der Abtropfnut (7) am Boden zwischen 2 mm und 10 mm, vorzugsweise zwischen 4 mm und 8 mm, insbesondere 5 mm bis 6 mm, beträgt.

9. Verbundplatte nach einem der Ansprüche 1 bis 8, dadurch gekennzeichnet,
daß die maximale Dicke des Dichtstreifens (8) zwischen 1 mm und 5 mm,
vorzugsweise etwa 2 mm bis 3 mm, beträgt.

10. Verbundplatte nach einem der Ansprüche 1 bis 9, dadurch gekennzeichnet,
daß der Dichtstreifen (8) aus Kunststoff, vorzugsweise aus einem spritzfähigen Kunststoff, insbesondere aus Polyurethan od. dgl., besteht und
vorzugsweise als gespritzte Dichtraupe ausgeführt ist.

- 2 -

0210491

Fig.1

Fig.2

Fig.3